# EUROPÄISCHE PATENTSCHRIFT

(11) **EP 0 351 670 B1**
(45) Veröffentlichungstag und Bekanntmachung des Hinweises auf die Patenterteilung: **07.01.1993**
(21) Anmeldenummer: 89112458.8
(22) Anmeldetag: 07.07.1989
(51) Int. Cl.: C09K 21/00, C08J 11/06, E04B 1/94

(54) **Schwerentflammbare Bauelemente, insbesondere Platten, und Verfahren zu ihrer Herstellung**
Poorly inflammable construction parts, especially boards, and process for their manufacture
Eléments de construction difficilement inflammables, en particulier des plaques, et procédé pour les fabriquer

(30) Priorität: 16.07.1988 DE 3824149
(43) Veröffentlichungstag der Anmeldung: 24.01.1990
(73) Patentinhaber: Chemische Fabrik Grünau GmbH, D-89251 Illertissen (DE)
(72) Erfinder: Graf, Robert, D-7919 Altenstadt (DE); Annemaier, Dieter, Dr., D-7901 Illerkirchberg 2 (DE)

(56) Entgegenhaltungen:
- EP-A- 0 162 974
- EP-A- 0 222 298
- DE-A- 2 206 829
- DE-A- 2 334 184
- DE-A- 2 539 195
- DE-A- 3 416 473
- DE-A- 3 620 321
- DE-A- 3 728 397

## Beschreibung

Die Erfindung betrifft schwerentflammbare Bauelemente, insbesondere Platten, und ein Verfahren zu ihrer Herstellung.

In den Industrieländern fallen bei vielen technischen Prozessen große Mengen an Abfallprodukten, wie Kunststoffteilen, Kunststoffolien, Gewebestückchen, Kunstfasern und Kunstfaservliesen an. Lange Zeit wurden diese unerwünschten Abfallprodukte auf Deponien gelagert, wobei sie fallweise infolge ihrer Leichtigkeit große Probleme verursachten (Platzbedarf, Verwehung durch Wind) oder auch ökologische Schwierigkeiten deshalb hervorriefen, weil sie entweder mikrobiell nicht abbaubar sind oder weil bei ihrem Abbau chemische Substanzen frei werden, die Luft, Boden und Gewässer schädigen können.

Deshalb werden immer wieder Versuche unternommen, diese Altmaterialien als Rohstoff für neue Artikel zu verwenden. Beispielweise ist in der DE-A-34 16 473 ein Verfahren zur Herstellung von Formteilen aus faserförmigen Abfallstoffen und Kleber beschrieben. Die so hergestellten Teile sind in Bezug auf die mechanischen und dämmtechnischen Eigenschaften mit Leichtbau- und Dämmplatten aus geschäumten Kunststoffen vergleichbar und haben den Vorteil, für die Umwelt entlastend zu sein. Brandschutztechnisch sind sie jedoch deutlich unterlegen. Bei Benutzung des Brandschachtverfahrens gemäß DIN 4102, Teil 1, zeigt sich eine so heftige Branderscheinung, verbunden mit rascher Brandweiterleitung, daß Platten gemäß der DE-A-34 16 473 nur als normalentflammbare Baustoffe (Baustoffklasse B 2) oder gar als leichtentflammbare Baustoffe (Baustoffklasse B 3) eingestuft werden können. Baurechtliche Vorschriften fordern jedoch in steigendem Maße schwerentflammbare Baustoffe (Baustoffklasse B 1 nach DIN 4102, Teil 1).

Versuche der Anmelderin haben gezeigt, daß sich durch die Zugabe von klassischen Flammschutzmitteln, wie Kombinationen aus Antimontrioxid und halogenhaltigen Substanzen oder Aluminiumhydroxid bei der Herstellung von Platten aus Abfallpolyester-Fasermaterial auch bei relativ hohen Dosierungen (bis zu 20 Gew.-%) nicht der gewünschte Brandschutz erreichen läßt. Noch höhere Dosierungen dieser Flammhemmer sind nicht möglich, da dann nur noch Formteile mit absolut ungenügenden mechanischen Eigenschaften erhalten werden. Erstaunlicherweise ist die Wirkung der beschriebenen Flammhemmer derartig gering, daß brandschutztechnisch keine besseren Formteile erhalten werden, als wenn die Menge des klassischen Feuerschutzmittels lediglich durch anorganisches inertes Material, wie Calciumcarbonatpulver, ersetzt wird. Als weiteres bekanntes Verfahren würde sich die Oberflächenbeschichtung und/oder Kaschierung mit Flammschutzmitteln anbieten. Dies kann beispielsweise durch Laminierung mit anorganischen Geweben geschehen, die gegebenenfalls noch zusätzlich mit Brandschutzbeschichtungen behandelt sind. Aber auch dieser Weg führt nicht zum gewünschten Erfolg.

Ferner wird in DE-A-23 34 184 ein band- oder plattenförmiges Verbundmaterial - vorzugsweise zur Schall- und Wärmedämmung - beschrieben, das aus einem Füllstoff enthaltenden und von harzhaltigen Deckschichten allseits ummantelten Kern besteht. Das Kernmaterial besteht aus einer Mischung von mineralischen Füllstoffen, Glas- oder Kunststoffasern und einem eindickfähigen Harz, welches mit dem Bindemittel der Deckschichten vernetzt. Das im Kernmaterial verwendete Harz ist vorzugsweise mit dem Bindemittel der Deckschichten identisch. Bevorzugt weist das Kernmaterial die folgende Zusammensetzung auf: Harzanteil 10 bis 30 %, Abfälle aus der Glasfaser- und/oder Textilfaserproduktion und/oder zerkleinerte Kunststoffabfälle bis 35 %, Rest leichte mineralische Füllstoffe, wie Bimsmehl, Blähton, Lavalit, Hohlglaskugeln. Die Harzmischung kann gegebenenfalls unter Verwendung besonderer Zusätze nicht brennbar eingestellt sein. Zur Herstellung derartiger Verbundmaterialien werden die Bestandteile des Kernmaterials homogen gemischt, anschließend gepreßt und mit der Deckschicht versehen.

Die EP-A-0 222 298 betrifft massive oder poröse Intumeszensmassen und damit hergestellte Konstruktionselemente, die bei Temperaturen über 100°C Wasser abspaltende Füllstoffe enthalten. Diese Intumeszensmassen basieren auf kalthärtenden Epoxidharzsystemen, die neben Phosphorsäurespendern und gegebenenfalls Cyanursäureabkömmlingen als wasserabspaltende Füllstoffe solche enthalten, die mittlere Korngrößen über 5µm besitzen und/oder BET-Oberflächen von weniger als 5 m²/g aufweisen. Als solche kommen insbesondere Aluminiumhydroxid-Füllstoffe in Frage, denen ferner Glas, Alkali- und Erdalkalisilicate, Borate, Phosphate, Oxide und vorzugsweise Calciumcarbonat (Dolomit) beigefügt sein können.

Der Erfindung liegt demgegenüber die Aufgabe zugrunde, Bauelemente unter Verwertung von Abfallstoffen zu schaffen, die die gewünschten mechanischen Eigenschaften besitzen und darüber hinaus noch schwerentflammbar sind.

Es wurde nun gefunden, daß Bauelemente, die außer dem Abfallmaterial und dem Kleber zusätzlich noch eine Kombination aus nichtbrennbaren anorganischen Zusätzen und einer Flammschutzmittelmischung enthalten, die gewünschte Schwerentflammbarkeit besitzen und trotzdem noch gute mechanische Eigenschaften haben.

Die vorliegende Erfindung betrifft dementsprechend schwerentflammbare Bauelemente, insbesondere Platten, bestehend aus einer gepreßten Mischung auf Basis von an sich brennbarem organischen Material, vorzugsweise organischem Abfallmaterial, nichtbrennbaren anorganischen Füllstoffen, flammhemmenden Zusätzen und einem Bindemittel, welche dadurch gekennzeichnet sind, daß sie die folgenden Bestandteile enthalten:
a) 5 bis 50 Gew.-% von an sich brennbarem organischen Material in Form von Teilchen mit einer flächenhaften Ausdehnung von 1 bis 20 mm und einer Dicke von 0,01 bis 4 mm,
b) 75 bis 20 Gew.-% von nichtbrennbaren anorganischen Füllstoffen, die mindestens zum Teil aus anorganischen Fasern und/oder anorganischen Leichtfüllstoffen bestehen,
c) 4 bis 40 Gew.-% einer Flammschutzmittelmischung aus verkohlenden und/oder gasabspaltenden, wasserunlöslichen Bestandteilen,
d) 3 bis 25 Gew.-% von mindestens einem die Bestandteile zusammenhaltenden, in ausreichendem Maße erhärteten Kleber,
   wobei
e) mindestens das an sich brennbare organische Material und mindestens ein Teil der anorganischen Füllstoffe in heterogener Mischung vorliegen,
f) die Heterogenität im Bereich von 1 mm² und 100 mm² liegt und
g) die Teilchen des an sich brennbaren organischen Materials im Bauelement räumlich getrennt voneinander angeordnet sind, wobei nichtbrennbare anorganische Füllstoffe und/oder Flammschutzmittel dazwischen liegen.

Als an sich brennbares organisches Material wird vorzugsweise ein Kunststoffabfallmaterial eingesetzt. In diesem Sinne werden hierfür nachstehend die Begriffe "Abfallmaterial" und Abfallstoffe" verwendet.

Platten oder sonstige Formteile, wie zum Beispiel Rohrschalen, die aus einer solchen Mischung bestehen, erfüllen mit beträchtlichem Sicherheitsabstand die Kriterien, die an "schwerentflammbare Baustoffe" gestellt werden. Zusätzlich besitzen sie gegenüber einer Vielzahl von handelsüblichen Platten, Formteilen oder Verkleidungsmaterialien neben der Entlastung der Umwelt auch technische Vorteile. So sind sie im Vergleich zu Preßspanplatten handelsüblicher Qualität wesentlich leichter, günstiger im Brandverhalten und wasserbeständiger. Die letztere Eigenschaft zeigt sich insbesondere darin, daß die Wasseraufnahme deutlich reduziert werden kann und zusätzlich keine Dimensionsveränderungen (Quellen) festgestellt werden. Gegenüber Schaumkunststoffplatten sind nicht nur brandschutztechnische, sondern auch akustische und bauphysikalische Vorteile (Offenporigkeit) vorhanden. Die Bauelemente haben auch gute Schall- und Wärmedämmeigenschaften.

Die einzelnen Bestandteile, zumindest das Kunststoffabfallmaterial und mindestens ein Teil der anorganischen Zusätze, liegen in den Bauelementen in heterogener Mischung, insbesondere in grobheterogener Mischung vor. Dies bringt überraschenderweise erhebliche Vorteile für das Brandverhalten. Das Abfallmaterial liegt im Bauelement in Form von Teilen oder Stückchen vor, vorzugsweise in einer Größe von 2 bis 15 mm. Flächenhafte Teile, bei denen die Dicke 0,5 bis 2 mm beträgt, sind besonders vorteilhaft. Die heterogene Struktur des Bauelementes bedingt, daß die Teile des Abfallsmaterials im Bauelement räumlich getrennt voneinander angeordnet sind, wobei nichtbrennbare Zusätze und/oder Flammschutzmittel zwischen den Teilen des Abfallmaterials liegen. Wenn die Bauelemente mit Feuer in Verbindung kommen, können zwar oberflächlich einzelne Teile des Abfallmaterials abbrennen, der Brand kann sich jedoch wegen des sich anschließenden inerten Füllmaterials bzw. der Brandschutzmittel nicht fortsetzen.

Die Abfallstoffe liegen vorteilhafterweise in Form von kleinen Stückchen von Faservliesen, Faserknäueln, Folienschnitzeln und/oder Schaumstoffstückchen vor. Besonders von Bedeutung ist die Erfindung für die Wiederverwertung von Polyesterfasern, die insbesondere in Form von unregelmäßig großen flächenhaften Stücken von Faservliesen als Abfallprodukte in großer Menge anfallen und ein erhebliches Entsorgungsproblem darstellen. Außer Kunststoffasern können auch Abfälle von natürlichen Fasern verwertet werden, die vorzugsweise ebenfalls wiederum nicht in Form von Einzelfasern, sondern in Stückchen- bzw. Teilchenform vorliegen. So kann Zellulose in Form von Papierschnitzeln vorliegen, Baumwolle in Form von Gewebestückchen oder Faserknäueln. Auch andere Kunststoffe, die in Form von Fasern, Folienstücken oder in sonstiger stückiger Form vorliegen können, sind verwertbar. So können beispielsweise Abfallmaterialien auch aus Polyacrylnitril, Polystyrol, Nylon, Polypropylen oder Polyethylen bestehen. Ferner braucht das Abfallmaterial nicht zwangsweise aus echtem Abfall zu bestehen. Ähnlich wie bei Spanplatten, die ursprünglich aus Abfallspänen hergestellt wurden, kann das an sich brennbare organische Material gezielt für die erfindungsgemäßen Bauelemente hergestellt und aufbereitet werden.

Die Flammschutzmittelmischung ist mit Vorteil frei von aliphatischen und aromatischen Halogenverbindungen und insbesondere auch frei von Antimonsalzen und sonstigen Schwermetallverbindungen, so daß im Brandfalle keine schädlichen Stoffe freigesetzt werden, wie dies bei diesen klassischen Brandschutzmitteln der Fall ist. Vorzugsweise ist das gesamte Bauelement frei von solchen Stoffen. Das Bauelement ist mit Vorteil steif ausgebildet und besitzt eine hohe Festigkeit. Diese ist besonders hoch, wenn die Abfallstoffe in Faserform vorliegen. Das Bauelement ist mechanisch bearbeitbar und kann beispielsweise gesägt, genagelt, gebohrt und geklebt werden. Aufgrund seines heterogenen und relativ grobkörnigen Primär-Aufbaus ist das Bauelement luftdurchlässig und hat zudem eine geringe Wärmeleitfähigkeit. Hinzu kommt, daß die Primärteilchen ihrerseits mit Vorteil luftdurchlässig sind, wie zum Beispiel die Vliesteilchen oder Faserknäuel.

Die Oberfläche des Bauelements kann so gestaltet sein, daß die einzelnen Bestandteile deutlich unterschieden werden können, insbesondere die Abfallstückchen und die anorganischen Zuschlagstoffe deutlich erkennbar sind und voneinander unterschieden werden können. Die Dichte der Bauelemente ist von der Dichte der einzelnen Bestandteile und vom Verpressungsgrad der Mischung abhängig. In der Regel liegt die Dichte zwischen 300 und 1000 kg/m³, insbesondere zwischen 350 und 800 kg/m³. Dichten im Bereich zwischen 450 und 650 kg/m³ haben sich für die Praxis besonders bewährt. Die Druckfestigkeit liegt vorzugsweise bei mindestens 2 N/mm², insbesondere bei mindestens 3 N/mm². Hier handelt es sich um Durchschnittswerte, da die Heterogenität im Bereich zwischen 1 mm² und 100 mm² liegt.

Der Kleber kann mindestens zum Teil ein Zwei-Komponenten-Kleber bzw. Duroplast sein. Es kann auch ein Schmelzkleber (Hotmelt) verwendet werden. Im Gegensatz zu den übrigen Bestandteilen ist der Kleber vorzugsweise gleichmäßig in dem Bauelement verteilt, um eine homogene Verfestigung der unterschiedlichen Bestandteile zu erhalten. Der Kleber kann auch ein Elastomer-Kleber sein, der dem Bauelement, wenn gewünscht, elastische Eigenschaften verleiht, zum Beispiel dann, wenn eine gewisse Biegbarkeit oder elastische Nachgebbarkeit gewünscht ist.

Die anorganischen Füllstoffe sind in Bezug auf Hitzeeinwirkung und/oder chemisch vorzugsweise inert. Sie können einerseits dazu dienen, die brennbaren Abfallstoffe räumlich voneinander zu trennen. Andererseits können sie auch zur Korrektur von Festigkeitswerten, der Dichte und anderen mechanischen Eigenschaften eingesetzt werden. Bevorzugt ist eine kombinierte Anwendung. So liegen die anorganischen Füllstoffe mindestens zum Teil, insbesondere mindestens zum überwiegenden Teil, in Form von anorganischen Fasern vor. Die Faserlänge liegt vorzugsweise im Bereich von 0,5 bis 20 mm. Die Fasern können auch beträchtlich länger sein, wenn die Fasern zu Faserknäueln gewickelt sind, deren Größe in der Größenordnung der Teilchen des Abfallmaterials liegt. Solche faserförmigen Zuschlagstoffe sind besonders dort von Vorteil, wo die Abfallstoffe selbst noch keine genügende Festigkeit für das Bauelement geben. Weiterhin sind Füllstoffe in Form von Leichtfüllstoffen besonders dort vorteilhaft, wo ein Bauelement mit geringer Dichte erwünscht ist. Solche Leichtfüllstoffe sind besonders mineralischen Ursprungs. Beispiele für solche Leichtfüllstoffe sind Glashohlkugeln, Aluminiumsilikat-Hohlkugeln, Blähton, geblähter Vermiculit oder Perlit sowie Gasbeton. Die Größe dieser Leichtfüllstoffe liegt normalerweise im Bereich zwischen 0,01 und 2 mm. Die anorganischen Faserstoffe können Glasfaser, Mineralfaser, Schlackenfaser und keramische Faser sein. Insbesondere dann, wenn die Abfallstoffe dem Bauelement keine besondere Festigkeit verleihen, sind die faserförmigen Füllstoffe in größerer Menge vorhanden als nichtfaserförmige Füllstoffe. Normalerweise liegt das Verhältnis von faserförmigen Füllstoffen zu nichtfaserförmigen Füllstoffen bei 2 : 1 bis 4 : 1, insbesondere bei ca. 3 : 1.

Die Flammschutzmittelmischung wirkt vorzugsweise ablativ (energie- und/oder substanzverbrauchend) und wirkt insbesondere in zwei Richtungen, und enthält hierzu einerseits verkohlend wirkende Bestandteile und andererseits gasabspaltende Bestandteile. Die verkohlend wirkenden Bestandteile führen schnell zu einer Verkohlung von brennbaren Komponenten. Zusätzliche Kohlenstoffspender für die verkohlend wirkenden Bestandteile sind nicht vorgesehen, da im Brandfalle die Verkohlung an den brennbaren Abfallstoffen stattfinden soll. Durch die Kohlenstoffbildung wird der Kohlenstoff dem Verbrennungsprozeß zumindest anfänglich weitgehend entzogen. Andererseits enthält die Flammschutzmittelmischung auch gasabspaltende Bestandteile, wobei es sich um nichtbrennbare Gase bzw. Dämpfe handelt. Die verkohlenden Bestandteile und/oder die gasabspaltenden Bestandteile sind wasserunlöslich bzw. wasserbeständig, so daß sie ihre Wirkung auch nach mehrmaliger Durchfeuchtung entfalten können. Zusätzlich können auch noch verglasend wirkende Zusätze, wie Borate, in der Mischung vorhanden sein. Mit besonderem Vorteil ist das gesamte Bauelement aus wasserbeständigen Materialien zusammengesetzt, so daß es durch Einwirkung von Feuchtigkeit oder Wasser nicht beschädigt oder zerstört wird.

Als verkohlenden Bestandteil oder verkohlende Bestandteile enthält die Flammschutzmittelmischung vorzugsweise mindestens ein Phosphat, insbesondere ein kondensiertes Phosphat. Ein vorteilhaftes Beispiel hierfür ist Ammoniumpolyphosphat. Die Phosphate entwickeln schon bei Temperaturen ab ca. 200 °C ihre verkohlende Wirkung, d.h. schon bevor Flammen die entsprechenden Stellen erreichen können. Als gasabspaltende Bestandteile eignen sich Hydroxide, wie Aluminiumhydroxid, Magnesiumhydroxid, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°, wogegen die Wasserabspaltung von Magnesiumhydroxid bei ca. 350° einsetzt, so daß die Gasabspaltung über einen größeren Temperaturbereich hinweg erfolgt.

Das Verfahren zur Herstellung der Bauelemente nach der Erfindung besteht darin, daß die einzelnen Mischungsbestandteile schonend miteinander vermischt und auf die gewünschte Dichte verpreßt werden, wobei die Pressung so lange aufrechterhalten bleibt, bis der Kleber in ausreichendem Maße erhärtet ist. Werden Schmelzkleber verwendet oder binden Duroplast-Kleber erst bei höheren Temperaturen ab, dann erfolgt das Verpressen bei erhöhter Temperatur, jedoch noch unterhalb der Temperatur, bei der verkohlende Bestandteile zu wirken beginnen. Deshalb wird die Preßtemperatur normalerweise bei max. ca. 200 °C gehalten. Die Vermischung der einzelnen Bestandteile erfolgt in den oben angegebenen Mengen. Bevorzugt werden brennbare Materialien in einer Menge von 10 bis 40 Gew.-% eingesetzt. Bei den nichtbrennbaren anorganischen Füllstoffen, wie Fasern und Leichtfüllstoffen, liegt die bevorzugte Menge bei 70 bis 25 Gew.-%. Die Menge der Flammschutzmittelmischung hängt im wesentlichen von der Menge der brennbaren Materialien ab. Der bevorzugte Bereich liegt bei 7,5 bis 30 Gew.-%. Der bevorzugte Bereich der Bindemittel bzw. Klebstoffe liegt bei 5 bis 15 Gew.-%.

Die Abfallteile werden vorzugsweise bereits in kleinteiliger Form zugegeben, wobei das Vermischen in der Weise durchgeführt wird, daß die Abfallteile im wesentlichen nicht weiter zerkleinert werden. Entsprechendes gilt auch für die anorganischen Fasern bzw. Fasergebilde.

Das Vermischen erfolgt vorzugsweise in Abwesenheit von Wasser, insbesondere in trockenem Zustand. Der Kleber kann, wenn erwünscht, in flüssiger oder gelöster Form zugegeben werden. Die anorganischen Füllstoffe, insbesondere die Leichtfüllstoffe können in der Größe zugesetzt werden, in der sie handelsüblich erhältlich sind. Die anorganischen Fasern können auf eine Länge von 1 bis 2 cm gekürzt werden oder, wenn sie in längerer Form vorliegen, zu Knäueln gewickelt werden. Die zugesetzten Knäuel werden beim vorsichtigen Vermischen vorzugsweise in ihrer Knäuelform erhalten.

Der Kleber wird demgegenüber in möglichst feiner Verteilung zugesetzt, um sich in der Mischung gleichmäßig zu verteilen. Hierzu wird der Kleber vorzugsweise in Pulverform zugegeben. Es ist auch möglich, Kleberkomponenten in flüssigem Zustand zuzugeben, beispielsweise einzusprühen. Neben Epoxidharzen kommen auch Formaldehyd-Kondensate und andere Duroplast-Kleber in Frage. Es können auch die üblichen Schmelzkleber eingesetzt werden.

Weitere Merkmale der Erfindung ergeben sich aus den nachfolgenden Beispielen, die bevorzugte Ausführungsformen der Erfindung zum Gegenstand haben. Sowohl bei den Beispielen als auch bei den Unteransprüchen können die einzelnen Merkmale jeweils für sich allein oder in Kombinationen miteinander verwirklicht sein und sind nicht an die Beispiele gebunden.

### Beispiel 1

In einem Pflugscharmischer werden 15 Gew.-% eines gehäckselten Polyestervlieses vorgelegt. Hierzu wird unter Mischen 15 Gew.-% einer Bindemittel-/Flammschutzmittelmischung, bestehend aus 30 Gew.-% Harnstoff-Formaldehydharz, 18 Gew.-% Ammoniumpolyphosphat, 20 Gew.-% Dimelamindiphosphat, 10 Gew.-% Magnesiumhydroxidpulver, sowie 22 Gew.-% Wasser und Hilfsstoffe gesprüht. Nachdem das Wasser von dieser Vormischung vollkommen abgetrocknet worden ist, werden hierzu 15 Gew.-% Mikroglaskugeln sowie 49 Gew.-% Mineralfasern und 6 Gew.-% eines Phenolharzes zugesetzt und intensiv vermischt. Die Mischung wird dann in einer Presse bei 200 bis 220 °C innerhalb von 5 Minuten zu einer Platte mit Dichte 600 kg/m² verpreßt. Bei einem mit solchen Platten durchgeführten Brandschachtversuch nach DIN 4102, Teil 1, wird eine mittlere Restlänge von mehr als 15 cm und eine maximale Rauchgastemperatur von 155 °C gemessen.

### Beispiel 2

In einem Pflugscharmischer werden 20 Gew.-% eines gehäckselten Polyestervlieses mit 9 Gew.-% Ammoniumpolyphosphat, 3 Gew.-% Aluminiumhydroxid, 5 Gew.-% Calciumborat, 7,5 Gew.-% Calciumcarbonat, 7 Gew.-% eines pulverförmigen Epoxidharz-Härtergemisches, 16 Gew.-% Aluminiumsilikat-Hohlkugeln, 29 Gew.-% Glasfasern und 3,5 Gew.-% Phenolharz intensiv gemischt. Die entstandene Mischung wird dann in einer Presse bei 200 °C innerhalb von 5 Minuten zu einer Platte mit Dichte 750 kg/m² verpreßt. Bei einem mit solchen Platten durchgeführten Brandschachtversuch nach DIN 4102, Teil 1, wird eine mittlere Restlänge von mehr als 15 cm und eine maximale Rauchgastemperatur von 170 °C gemessen.

### Beispiel 3

In einem Pflugscharmischer werden 10,0 Gew.-% geschnitzelte Polethylenfolie (Tragetaschen) mit 45 Gew.-% Keramikfasern, 21 Gew.-% Aluminiumsilikat-Hohlkugeln sowie 24 Gew.-% einer Bindemittel-/Flammschutzmittelmischung, bestehend aus 56,9 Gew.-% Phenolharz, 14,4 Gew.-% Ammoniumpolyphosphat, 16,2 Gew.-% Aluminiumhydroxid und 12,5 Gew.-% Magnesiumhydroxid intensiv gemischt. Die erhaltene Mischung wird dann in einer Presse bei 180 °C innerhalb von 10 Minuten zu einer Rohrhalbschale mit Dichte 600 kg/m³ verpreßt. Bei einem mit solchen Halbschalen durchgeführten Brandschachtversuch nach DIN 4102, Teil 1, wird eine mittlere Restlänge von mehr als 15 cm und eine maximale Rauchgastemperatur von 135 °C gemessen.

### Beispiel 4

In einem Pflugscharmischer werden 22,0 Gew.-% gehäckselte Polyacrylnitrilfaserabfälle mit 39 Gew.-% Schlackenfasern, 10 Gew.-% Perlite sowie 29 Gew.-% einer Bindemittel-/Flammschutzmittelmischung, bestehend aus 36,2 Gew.-% eines Polyvinylacetat-/Ethylen-/Copolymers, 19,7 Gew.-% Ammoniumpolyphosphat, 28,3 Gew.-% Aluminiumhydroxid und 15,8 Gew.-% Magnesiumhydroxid intensiv gemischt. Die erhaltene heterogene Mischung wird dann in einer Presse bei 190 °C innerhalb von 8 Minuten zu einer Platte mit Dichte 550 kg/m³ verpreßt. Bei einem mit solchen Platten durchgeführten Brandschachtversuch nach DIN 4102, Teil 1, wird eine mittlere Restlänge von mehr als 15 cm und eine maximale Rauchgastemperatur von 165 °C gemessen.

### Beispiel 5

In einem Pflugscharmischer werden 32,0 Gew.-% Papierschnitzel mit 30,0 Gew.-% Glasfasern, 12,5 Gew.-% Perlite sowie 25,5 Gew.-% einer Bindemittel-/Flammschutzmittelmischung, bestehend aus 23,5 Gew.-% Melaminformaldehydharz, 11,8 Gew.-% Phenolharz, 27,5 Gew.-% Ammoniumpolyphosphat, 25,1 Gew.-% Aluminiumhydroxid und 12,1 Gew.-% Magnesiumhydroxid intensiv gemischt. Die erhaltene Mischung wird bei 200 °C innerhalb von 5 Minuten zu einer Platte mit Dichte 600 kg/m³ verpreßt. Bei einem mit solchen Platten durchgeführten Brandschachtversuch nach DIN 4102, Teil 1, wird eine mittlere Restlänge von mehr als 15 cm und eine maximale Rauchgastemperatur von 140 °C gemessen.

## Patentansprüche

1. Schwerentflammbare Bauelemente, insbesondere Platten, bestehend aus einer gepreßten Mischung auf Basis von an sich brennbarem organischen Material, vorzugsweise organischem Abfallmaterial, nichtbrennbaren anorganischen Füllstoffen, flammhemmenden Zusätzen und einem Bindemittel,
dadurch gekennzeichnet,
daß sie die folgenden Bestandteile enthalten:
a) 5 bis 50 Gew.-% von an sich brennbarem organischen Material in Form von Teilchen mit einer flächenhaften Ausdehnung von 1 bis 20 mm und einer Dicke von 0,01 bis 4 mm,
b) 75 bis 20 Gew.-% von nichtbrennbaren anorganischen Füllstoffen, die mindestens zum Teil aus anorganischen Fasern und/oder anorganischen Leichtfüllstoffen bestehen,
c) 4 bis 40 Gew.-% einer Flammschutzmittelmischung aus verkohlenden und/oder gasabspaltenden, wasserunlöslichen Bestandteilen,
d) 3 bis 25 Gew.-% von mindestens einem die Bestandteile zusammenhaltenden, in ausreichendem Maße erhärteten Kleber,
wobei
e) mindestens das an sich brennbare organische Material und mindestens ein Teil der anorganischen Füllstoffe in heterogener Mischung vorliegen,
f) die Heterogenität im Bereich von 1 mm² und 100 mm² liegt und
g) die Teilchen des an sich brennbaren organischen Materials im Bauelement räumlich getrennt voneinander angeordnet sind, wobei nichtbrennbare anorganische Füllstoffe und/oder Flammschutzmittel dazwischen liegen.

2. Bauelemente nach Anspruch 1, dadurch gekennzeichnet, daß das an sich brennbare organische Material ein Kunststoffabfallmaterial ist.

3. Bauelemente nach Anspruch 1 und 2, dadurch gekennzeichnet, daß das an sich brennbare organische Material in Form von Teilchen mit einer flächenhaften Ausdehnung von 2 bis 15 mm und einer Dicke von 0,5 bis 2 mm vorliegt.

4. Bauelemente nach Ansprüchen 1 bis 3, dadurch gekennzeichnet, daß das an sich brennbare organische Material in Form von kleinen Stückchen von Faservliesen, Faserknäueln, Folienschnitzeln und/oder Schaumstoffstückchen vorliegt.

5. Bauelemente nach Ansprüchen 1 bis 4, dadurch gekennzeichnet, daß sie steif sind.

6. Bauelemente nach Ansprüchen 1 bis 5, dadurch gekennzeichnet, daß sie eine Druckfestigkeit von über 2 N/mm², insbesondere mindestens 3 N/mm², besitzen.

7. Bauelemente nach Anspruch 1, dadurch gekennzeichnet, daß die anorganischen Füllstoffe zum überwiegenden Teil aus anorganischen Fasern bestehen.

8. Bauelemente nach Anspruch 7, dadurch gekennzeichnet, daß das Gewichtsverhältnis von faserförmigen Füllstoffen zu nichtfaserförmigen Füllstoffen bei 2 : 1 bis 4 : 1, insbesondere 3 : 1, liegt.

9. Bauelemente nach Anspruch 1, dadurch gekennzeichnet, daß die anorganischen Leichtfüllstoffe mineralischen Ursprungs sind.

10. Bauelemente nach Anspruch 1, dadurch gekennzeichnet, daß der verkohlende Bestandteil der Flammschutzmittelmischung mindestens ein Phosphat, insbesondere ein kondensiertes Phosphat, ist.

11. Bauelemente nach Anspruch 1, dadurch gekennzeichnet, daß die Flammschutzmittelmischung mindestens zwei gasabspaltende Bestandteile enthält, die bei verschiedenen Temperaturen wirksam werden.

12. Bauelemente nach Ansprüchen 1 und 11, dadurch gekennzeichnet, daß die Flammschutzmittelmischung als gasabspaltende Bestandteile Hydroxide, insbesondere Aluminiumhydroxid und/oder Magnesiumhydroxid, und/oder Carbonate und/oder basische Carbonate enthält.

13. Bauelemente nach Ansprüchen 1 bis 12, dadurch gekennzeichnet, daß die Flammschutzmittelmischung und vorzugsweise die gesamte Mischung der Bauelemente frei von aliphatischen und aromatischen Halogenverbindungen, Antimonsalzen und anderen Schwermetallverbindungen ist.

14. Bauelemente nach Ansprüchen 1 bis 12, dadurch gekennzeichnet, daß sämtliche Bestandteile wasserunlöslich sind.

15. Verfahren zur Herstellung von Bauelementen nach Ansprüchen 1 bis 14, dadurch gekennzeichnet, daß die Bestandteile schonend miteinander vermischt und auf die gewünschte Dichte verpreßt werden, wobei die Pressung so lange aufrechterhalten bleibt, bis der Kleber in ausreichendem Maße erhärtet ist.

16. Verfahren nach Anspruch 15, dadurch gekennzeichnet, daß die an sich brennbaren organischen Bestandteile in kleinstückiger Form zugegeben werden und das Vermischen in der Weise durchgeführt wird, daß die vorstehend genannten Bestandteile im wesentlichen nicht weiter zerkleinert werden.

17. Verfahren nach Anspruch 15 oder 16, dadurch gekennzeichnet, daß das Vermischen im wesentlichen in trockenem Zustand vorgenommen wird.

18. Verfahren nach einem der Ansprüche 15 bis 17, dadurch gekennzeichnet, daß der Kleber bzw. seine Komponenten in feinteiliger Form zugegeben werden.

19. Verfahren nach einem der Ansprüche 15 bis 18, dadurch gekennzeichnet, daß die anorganischen Fasern in Form von Knäueln oder Flocken zugegeben werden und das die Größe der Knäuel bzw. Flocken in etwa der Teilchengröße des an sich brennbaren organischen Materials entspricht.

## Claims

1. Low-flammability structural elements, particularly boards, consisting of a compressed mixture on the basis of organic material combustible per se, preferably organic waste material, non-combustible inorganic fillers, flame-retardant additives and a binder,
characterized in that,
they contain the following components:
a) 5 to 50 wt-% organic material combustible per se in the form of particles with a planar elongation of 1 to 20 mm and a thickness of 0.01 to 4 mm,
b) 75 to 20 wt-% non-combustible inorganic fillers which at least partly consist of inorganic fibres and/or inorganic lightweight fillers,
c) 4 to 40 wt-% of a flame-proofing agent mixture of carbonizing and/or gas-splitting, water-insoluble components,
d) 3 to 25 wt-% of at least one adequately hardened adhesive binding the components together, where
e) at least the organic material combustible per se and at least some of the inorganic fillers are present in heterogeneous mixture,
f) the heterogeneity is in the range of 1 mm² and 100 mm² and
g) the particles of the organic material combustible per se are arranged spatially separated from each other in the structural element, non-combustible inorganic fillers and/or flame-proofing agent lying between them.

2. Structural elements according to claim 1, characterized in that the organic material combustible per se is a plastics waste material.

3. Structural elements according to claim 1 and 2, characterized in that the material combustible per se is present in the form of particles with a planar elongation of 2 to 15 mm and a thickness of 0.5 to 2 mm.

4. Structural elements according to claims 1 to 3, characterized in that the organic material combustible per se is present in the form of small pieces of non-woven fabrics, fibre balls, film chips and/or plastics foam pieces.

5. Structural elements according to claims 1 to 4, characterized in that they are rigid.

6. Structural elements according to claims 1 to 5, characterized in that they have a compressive strength of more than 2 N/mm², particularly at least 3 N/mm².

7. Structural elements according to claim 1, characterized in that the inorganic fillers predominantly consist of inorganic fibres.

8. Structural elements according to claim 7, characterized in that the proportion by weight of fibrous fillers to non-fibrous fillers is from 2 : 1 to 4 : 1, particularly 3 : 1.

9. Structural elements according to claim 1, characterized in that the inorganic lightweight fillers are of mineral origin.

10. Structural elements according to claim 1, characterized in that the carbonizing component of the flame-proofing agent mixture is at least one phosphate, particularly a condensed phosphate.

11. Structural elements according to claim 1, characterized in that the flame-proofing agent mixture contains at least two gas-splitting components which become effective at different temperatures.

12. Structural elements according to claims 1 and 11, characterized in that the flame-proofing agent mixture contains hydroxides, particularly aluminum hydroxide and/or magnesium hydroxide, and/or carbonates and/or basic carbonates as gas-splitting components.

13. Structural elements according to claims 1 to 12, characterized in that the flame-proofing agent mixture and preferably the entire structural elements mixture is free of aliphatic and aromatic halogen compounds, antimony salts and other heavy metal compounds.

14. Structural elements according to claims 1 to 12, characterized in that all the components are water-insoluble.

15. Process for preparing structural elements according to claims 1 to 14, characterized in that the components are gently mixed together and compressed to the desired density, compression being maintained until the adhesive is adequately hardened.

16. Process according to claim 15, characterized in that the organic constituents combustible per se are added in the form of small pieces and mixing is carried out in such a way that the previously-mentioned components are not significantly further reduced.

17. Process according to claim 15 or 16, characterized in that the mixing is essentially carried out in the dry state.

18. Process according to one of the claims 15 to 17, characterized in that the adhesive or its components are added in finely dispersed form.

19. Process according to one of the claims 15 to 18, characterized in that the inorganic fibres are added in the form of balls or flocks and the size of the balls or flocks approximately corresponds to the particle size of the organic material combustible per se.

## Revendications

1. Eléments de construction difficilement inflammables et, en particulier, panneaux constitués d'un mélange comprimé à base de matériaux organiques combustibles et, de préférence, de déchets organiques, de matières de charge inorganiques non combustibles, d'additifs d'ignifugation et d'un liant,
caractérisés en ce qu'ils contiennent les constituants suivants:
a) de 5 à 50% en poids de matières organiques combustibles sous forme de particules, ayant une largeur de 1 à 20 mm et une épaisseur de 0,01 à 4 mm,
b) de 75 à 20% en poids de matières de charge inorganiques non combustibles, constituées au moins partiellement de fibres inorganiques et/ou de matières de charge inorganiques légères,
c) de 4 à 40% en poids d'un mélange d'agents d'ignifugation constitué de particules carbonisées et/ou insolubles dans l'eau et dégageant des gaz,
d) de 3 à 25% en poids d'au moins une colle assemblant les constituants et durcie d'une manière suffisante, et, dans ce cas,
e) au moins le matériau organique combustible et au moins une partie des matières de charge inorganiques se présentent sous forme de mélange hétérogène,
f) l'hétérogénéité est comprise dans la gamme de 1 mm² à 100 mm², et
g) les particules de matériaux organiques combustibles sont disposées dans l'élément de construction en étant séparées spatialement les unes des autres, tandis que les matières de charge inorganiques non combustibles et/ou les agents d'ignifugation se trouvent entre elles.

2. Eléments de construction selon la revendication 1, caractérisés en ce que la matière organique combustible est un déchet de matière plastique.

3. Eléments de construction selon les revendications 1 et 2, caractérisés en ce que la matière organique combustible se présente sous forme de particules ayant une largeur de 2 à 15 mm et une épaisseur de 0,5 à 2 mm.

4. Eléments de construction selon les revendications 1 à 3, caractérisés en ce que la matière organique combustible se présente sous forme de petits morceaux de nappes de fibres, de pelotes de fibres, de rognures de feuilles et/ou de morceaux de mousse de plastique.

5. Eléments de construction selon les revendications 1 à 4, caractérisés en ce qu'ils sont rigides.

6. Eléments de construction selon les revendications 1 à 5, caractérisés en ce qu'ils possèdent une résistance à la compression supérieure à 2 N/mm² et, en particulier, d'au moins 3 N/mm².

7. Eléments de construction selon la revendication 1, caractérisés en ce que les matières de charge inorganiques sont constituées principalement de fibres inorganiques.

8. Eléments de construction selon la revendication 7, caractérisés en ce que le rapport pondéral des matières de charge fibreuses aux matières de charges non fibreuses est compris entre 2:1 et 4:1 et est égal, en particulier, à 3:1.

9. Eléments de construction selon la revendication 1, caractérisés en ce que les matières de charge légères inorganiques sont d'origine minérale.

10. Eléments de construction selon la revendication 1, caractérisés en ce que le constituant carbonisable du mélange d'agents d'ignifugation est au moins un phosphate et, en particulier, un phosphate condensé.

11. Eléments de construction selon la revendication 1, caractérisés en ce que le mélange d'agents d'ignifugation contient au moins deux constituants dégageant des gaz qui agissent à des températures différentes.

12. Eléments de construction selon les revendications 1 et 11, caractérisés en ce que le mélange d'agents d'ignifugation contient comme constituants dégageant des gaz, des hydroxydes et, en particulier, de l'hydroxyde d'aluminium et/ou de l'hydroxyde de magnésium et/ou des carbonates et/ou des carbonates basiques.

13. Eléments de construction selon les revendications 1 à 12, caractérisés en ce que le mélange d'agents d'ignifugation et, de préférence, tout le mélange des éléments de construction, est exempt de composés halogénés aliphatiques et aromatiques, de sels d'antimoine et d'autres composés de métaux lourds.

14. Eléments de construction selon les revendications 1 à 12, caractérisés en ce que tous les constituants sont insolubles dans l'eau.

15. Procédé de fabrication d'éléments de construction selon les revendications 1 à 14, caractérisé en ce que les constituants sont mélangés soigneusement les uns aux autres et sont comprimés à la densité souhaitée, tandis que la compression est maintenue suffisamment longtemps pour que la colle durcisse dans une mesure suffisante.

16. Procédé selon la revendication 15, caractérisé en ce que les constituants organiques combustibles sont ajoutés sous forme de petits morceaux et que le mélange est effectué de façon à ce que les constituants précités ne soient pas divisés essentiellement davantage.

17. Procédé selon la revendication 15 ou 16, caractérisé en ce que le mélange est effectué essentiellement à l'état sec.

18. Procédé selon l'une des revendications 15 à 16, caractérisé en ce que la colle ou ses constituants sont ajoutés sous forme de particules fines.

19. Procédé selon l'une des revendications 15 à 18, caractérisé en ce que les fibres inorganiques sont ajoutées sous forme de pelotes ou de flocons et que la grandeur des pelotes ou des flocons correspond à peu près à la granulométrie de la matière organique combustible.
